# EUROPÄISCHE PATENTSCHRIFT

(11) **EP 1 325 658 B1**
(45) Veröffentlichungstag und Bekanntmachung des Hinweises auf die Patenterteilung: **07.04.2010**
(21) Anmeldenummer: 01978094.9
(22) Anmeldetag: 04.09.2001
(51) Int. Cl.: H04W 64/00

(54) **VERFAHREN ZUR POSITIONSERMITTLUNG MINDESTENS EINES TEILNEHMERGERÄTS EINES FUNKKOMMUNIKATIONSSYSTEMS SOWIE ZUGEHÖRIGES FUNKKOMMUNIKATIONSSYSTEM**
METHOD FOR DETERMINING THE POSITION OF AT LEAST ONE SUBSCRIBER TERMINAL OF A RADIO COMMUNICATIONS SYSTEM, AND A CORRESPONDING RADIO COMMUNICATIONS SYSTEM
PROCEDE POUR DETERMINER LA POSITION D'AU MOINS UN POSTE D'ABONNE D'UN SYSTEME DE RADIOCOMMUNICATION ET SYSTEME DE RADIOCOMMUNICATION CORRESPONDANT

(30) Priorität: 09.10.2000 DE 10049794
(43) Veröffentlichungstag der Anmeldung: 09.07.2003
(73) Patentinhaber: Palm, Inc., Sunnyvale, CA 94085-2801 (US)
(72) Erfinder: ECKERT, Michael, 38122 Braunschweig (DE); HANS, Martin, 31139 Hildesheim (DE); OTTE, Andreas, 29227 Celle (DE); BECKMANN, Mark, 38102 Braunschweig (DE)
(74) Vertreter: Samson & Partner
(86) Internationale Anmeldenummer: PCT/DE2001/003399
(87) Internationale Veröffentlichungsnummer: WO 2002/032176

(56) Entgegenhaltungen:
- WO-A-00/31988
- WO-A-00/76245
- WO-A-99/66740
- "UMTS;Stage 2 functional Specification of Location Services in UTRAN (3GPP TS 25.305 version 3.3.0 Release 1999" ETSI TS 125 305 V3.3.0, September 2000 (2000-09), Seiten 1-42, XP002192264 in der Anmeldung erwähnt
- ETSI: "TS 125 413 Universal Mobile Telecommunications System (UMTS);UTRAN Iu Interface RANAP Signalling (3G TS 25.413 Version 3.0.0 Release 1999)" ETSI TS 125 413 V3.0.0, XX, XX, Januar 2000 (2000-01), Seiten 1-147, XP002165163

## Beschreibung

In einem Funkkommunikationssytem wie z.B. nach dem GSM (global system for mobile communication) oder UMTS (universal mobile telecommunication system) Standard kann es in der Praxis ggf. von Interesse sein, den aktuellen Standort bzw. Aufenthaltsort eines spezifischen Teilnehmergeräts, insbesondere Mobilfunkgeräts, selektiv zu bestimmen.

Der Erfindung liegt als Aufgabe zugrunde, einen Weg aufzuzeigen, wie bei einem Funkkommunikationssystem die Positionsermittlung eines spezifischen Teilnehmergeräts selektiv in einfacher sowie zuverlässiger Weise durchgeführt werden kann. Gemäß der Erfindung wird diese Aufgabe durch ein Verfahren gemäß den Merkmalen des Anspruchs 1 sowie durch ein Funkkommunikationssystem mit den Merkmalen des Anspruchs 8 gelöst.

Dadurch, daß das Anfragesignal nach der Positionsermittlung beines bestimmten Teilnehmergeräts von der ersten, ursprünglich zuständigen Funknetzwerk-Kontrolleinheit zur neu zuständigen, zweiten Funknetzwerk-Kontrolleinheit weitergegeben wird, wird in einfacher Weise eine zuverlässige Positionermittlung des jeweiligen Teilnehmergeräts ermöglicht. Selbst bei einem mobilen Teilnehmergerät, vorzugsweise einer Mobilstation wie z.B. Handy, können somit dessen wechselnde Aufenthaltsorte in verschiedenen Funkzellen, deren verschiedene Gruppen von Basisstationen durch verschiedene Funknetzwerk-Kontrolleinheiten koordiniert werden, effizient ermittelt werden.

Sonstige Weiterbildungen der Erfindung sind in den Unteransprüchen wiedergegeben.

Die Erfindung und ihre Weiterbildungen wird nachfolgend anhand von Zeichnungen näher erläutert.

Es zeigen:

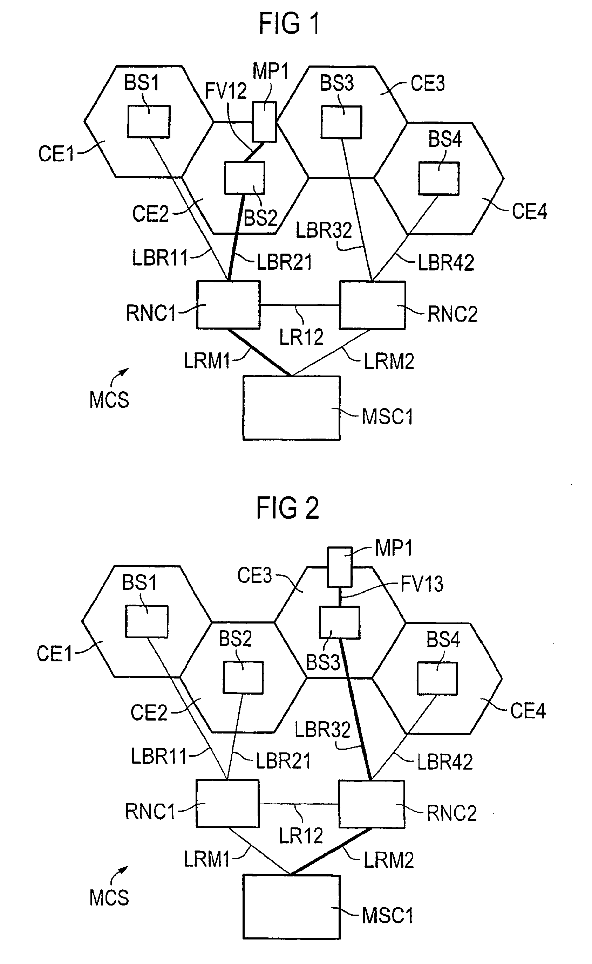

- Figur 1: in schematischer Darstellung den funktiona- len Funkverbindungsaufbau zwischen den Kom- ponenten eines Funkkommunikationsnetzes, insbesondere Mobilfunksystems, für ein be- stimmtes, zu ortendes Teilnehmergerät in einer ersten Aufenthaltsfunkzelle, deren Basisstation einer ersten Funknetzwerk- Kontrolleinheit zugeordnet ist,
- Figur 2: in schematischer Darstellung eine erste Möglichkeit für den funktionalen Funkver- bindungsaufbau des Teilnehmergeräts nach Figur 1 in einer zweiten, zu Figur 1 ver- schiedenen Aufenthaltsfunkzelle dieses Funkkommunikationsnetzes, deren Basisstati- on jetzt von einer anderen, zweiten Funk- netzwerk-Kontrolleinheit kontrolliert wird,

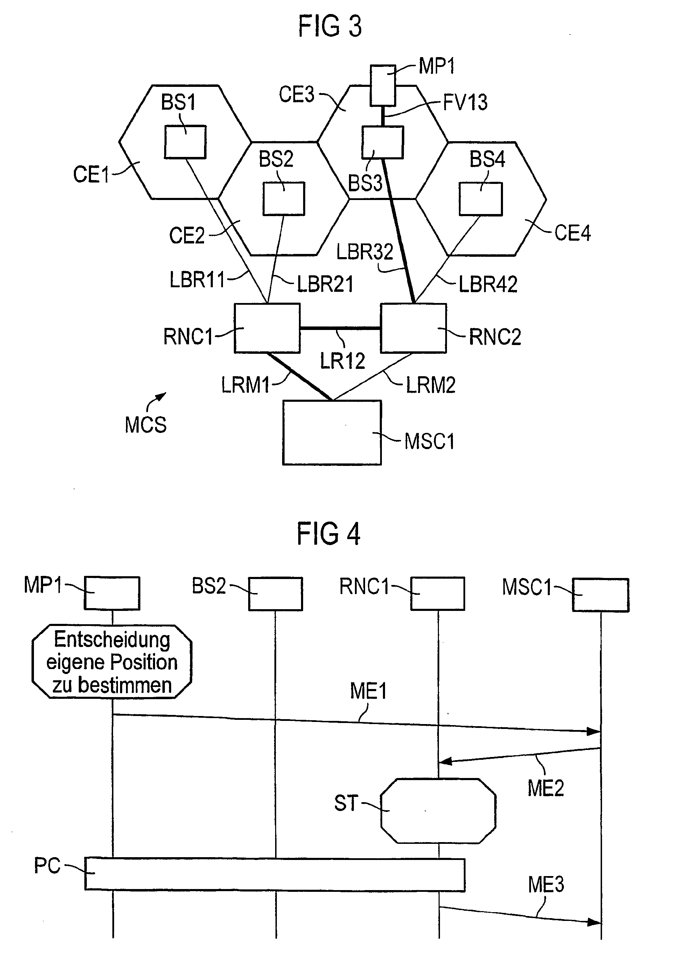

- Figur 3: in schematischer Darstellung eine zweite Möglichkeit für den funktionalen Funkver- bindungsaufbau des Teilnehmergeräts nach Figur 1 in einer zweiten, zu Figur 1 ver- schiedenen Aufenthaltsfunkzelle dieses Funkkommunikationsnetzes, deren Basisstati- on jetzt von einer anderen, zweiten Funk- netzwerk-Kontrolleinheit kontrolliert wird,
- Figur 4: in schematischer Darstellung das Signali- sierungsschema zur Positionsermittlung des jeweilig zu ortenden Teilnehmergeräts zwi- schen den Schnittstellen dieses Teilnehmer- geräts, der Basisstation in dessen momenta- ner Aufenthaltsfunkzelle, der aktuell zuge- ordneten Funknetzwerk-Kontrolleinheit zur Verwaltung dieser Basisstation, sowie einer übergeordneten Netzwerkeinheit zur Koordi- nierung der Kommunikationsverbindungen meh- rerer Funknetzwerk-Kontrolleinheiten,

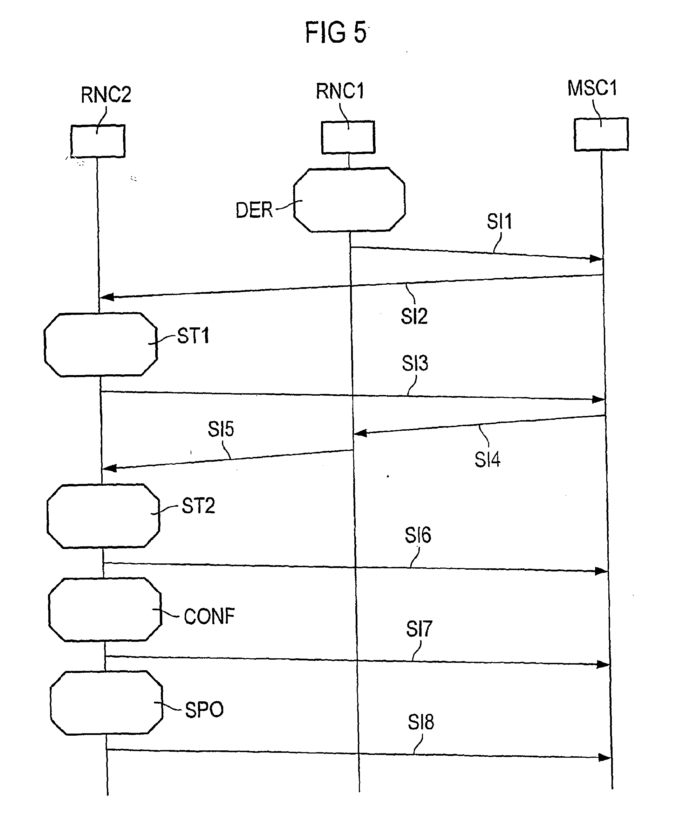

- Figur 5: schematisch den funktionalen Signalisie- rungsablauf zwischen den verschiedenen Kom- ponenten des Funkkommunikationssystems nach Figur 1 gemäß einer ersten Variante des er- findungsgemäßen Verfahrens zur Positionser- mittlung des Teilnehmergeräts nach Figur 1, das von seiner dortigen, ersten Aufent- haltsfunkzelle in die zweite Aufenthalts- funkzelle nach Figur 2 wechselt,

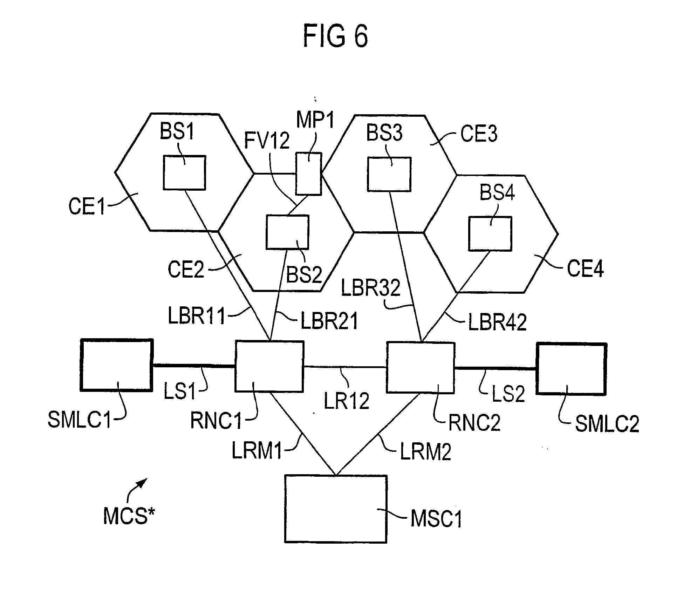

- Figur 6: in schematischer Darstellung den Prinzip- aufbau eines gegenüber Figur 3 abgewandel- ten Funkkommunikationssystems zur Durchfüh- rung einer zweiten Variante des erfindungs- gemäßen Verfahrens, und

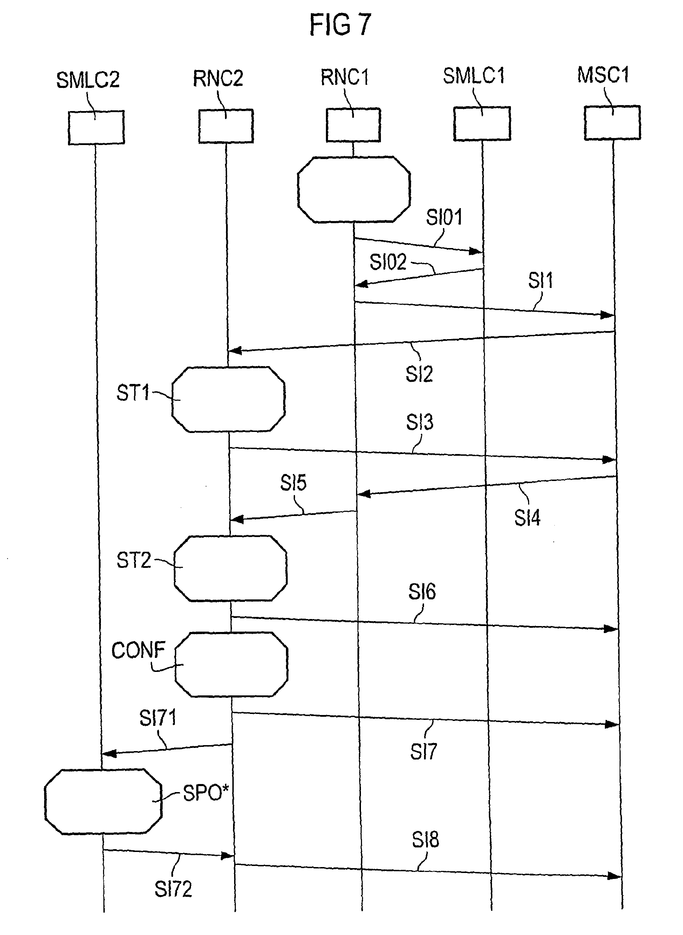

- Figur 7: schematisch den funktionalen Signalisie- rungsablauf zwischen den verschiedenen Kom- ponenten des Funkkommunikationssystems nach Figur 6 gemäß der zweiten Variante des er- findungsgemäßen Verfahrens.

Elemente mit gleicher Funktion und Wirkungsweise sind in den Figuren 1 mit 7 jeweils mit denselben Bezugszeichen versehen.

Im zellularen Mobilfunksystem MCS von Figur 1 spannen Basisstationen wie z.B. BS1 mit BS4 Funkzellen wie z.B. CE1 mit CE4 auf. Dabei ist jeder Basisstation jeweils eine Funkzelle spezifisch, d.h. selektiv zugeordnet. Innerhalb einer Funkzelle wie z.B. CE2 kann eine Mobilfunkstation wie z.B. MP1 eine Funkverbindung mit der zugeordneten Basisstation wie z.B. BS2 haben, die diese momentane Aufenthaltsfunkzelle bedient. Vorzugsweise ist das Mobilfunksystem nach dem UMTS Standard (universal mobile telecommunication system) ausgebildet. Eine oder mehrere Basisstationen sind jeweils als Gruppe über Festnetzverbindungen und/oder Funkverbindungen mit einer gemeinsamen, sogenannten Funknetzwerk-Kontrolleinheit (Radio Network Controller) verbunden. In der Praxis weist ein Mobilfunksystem vorzugsweise mehrere Gruppen von ein oder mehreren Basisstationen auf, wobei jeder Gruppe je eine Funknetzwerk-Kontrolleinheit zur Koordination des Funkverkehrs innerhalb der jeweiligen Gruppe zugeordnet ist.

In der Figur 1 ist beispielsweise eine erste Gruppe von Basisstationen durch die beiden Basisstationen BS1 und BS2 gebildet. Diese sind gemeinsam an die erste Funknetzwerk-Kontrolleinheit RNC1 über zugehörige Festnetzverbindungen LBR11, LBR21 angekoppelt. Entsprechend dazu sind die beiden Basisstationen BS3, BS4 über Festnetzverbindungen LBR32, LBR42 an eine zweite Funknetzwerk-Kontrolleinheit RNC2 als zweite Gruppe gemeinsam angekoppelt und werden von dieser aus kontrolliert und verwaltet. Eine solche Funknetzwerk-Kontrolleinheit und ihre zugeordneten Basisstationen werden zusammen als Funknetzwerk-Teilsystem bezeichnet (RNS - Radio Network Subsystem). Die Funknetzwerk-Kontrolleinheiten wie z.B. RNC1, RNC2 übernehmen z.B. die Kontrolle der Funkresourcen innerhalb des jeweiligen Teilsystems. Eine bestimmte Mobilfunkstation wird somit immer von genau einer Funknetzwerk-Kontrolleinheit aus kontrolliert. Diese Funknetzwerk-Kontrolleinheit wird dann bezogen auf diese eine bestimmte Mobilfunkstation als dienende Funknetzwerk-Kontrolleinheit (serving RNC (= SRNC)) bezeichnet. Das gesamte Teilnetzwerk wird bezogen auf diese eine Mobilfunkstation als dienendes Funknetzwerk-Teilsystem (Serving RNS (= SRNS)) bezeichnet. Eine oder mehrere Funknetzwerk-Kontrolleinheiten wie z.B. RNC1, RNC2 sind über weitere Festnetz- und/oder Funkverbindungen wie z.B. LRM1, LRM2 mit jeweils einer höheren Netzwerkeinheit wie z.B. einem sogenannten Mobile Switching Center (= MSC) und/oder einer sogenannten Serving GPRS Support Node (=SGSN) verbunden. MSC und/oder SGSN übernehmen Kontrollaufgaben bzgl. der Mobilfunkstationen. Sie sorgen z.B. dafür, daß aus externen Netzwerken ankommende Anrufe letztendlich an die zuständige Basisstation weitergeleitet werden, die eine Funkverbindung mit der gewünschten Mobilfunkstation hat. Weiterhin können die Funknetzwerk-Kontrolleinheiten wie z.B. RNC1, RNC2 wiederum untereinander über eine Festnetz- oder Funkverbindung wie z.B. LR12 direkt, d.h. unmittelbar verbunden sein. Eine solche Direktverbindung kann unter anderem für eine sogenannte SRNS relocation verwendet werden.

Im folgenden wird die Funktion einer SRNS relocation im einzeln erläutert:
In der Figur 1 hält sich die Mobilfunkstation MP1 beispielhaft in der Funkzelle CE2 auf. Sie hat eine erste Funkverbindung FV12 über ihre Luftschnittstelle zur Basisstation BS2. Die aktuelle Aufenthaltsfunkzelle CE2 wird also von der Basisstation BS2 aufgespannt und bedient, welche über eine erste Schnittstelle LBR21 mit der ersten Funknetzwerk-Kontrolleinheit RNC1 verbunden ist. Die Funknetzwerk-Kontrolleinheit RNC1 ist über die Festnetzverbindung LRM1 mit der funkfunktiontechnisch betrachtet hierarchisch höheren Netzwerkeinheit MSC1 verbunden, die insbesondere z.B. entweder ein mobile switching center oder ein serving GPRS support node sein kann. Die Gesamtverbindung zwischen der Mobilfurikstation MP1 und der höheren Netzwerkeinheit MSC1, die die Funknetzwerk-Kontrolleinheiten koordiniert, ist mit dicker gezeichneten Linien gekennzeichnet und besteht somit aus FV12, LBR21, LRM1.

Bewegt sich die Mobilfunkstation MP1 nun von der Funkzelle CE2 in die Funkzelle CE3, so ist entsprechend der Figur 2 die Mobilfunkstation MP1 anschließend über eine zweite Funkverbindung FV13 mit der Basisstation BS3 verbunden, die wiederum mit der zweiten Festnetzverbindung LBR32 mit der zweiten Funknetzwerk-Kontrolleinheit RNC2 verbunden ist. Ein solcher Wechsel der Funkverbindung zwischen einer Mobilfunkstation und einer Basisstation von einer ersten Basisstation zu einer zweiten Basisstation wird im allgemeinen mit Handover bezeichnet. Bei und/oder anschließend nach einem solchen beschriebenen Handover der jeweiligen Mobilfunkstation vom Funkzellenbereich einer ersten Basisstation in den Funkzellenbereich einer weiteren, anderen Basisstation kann zusätzlich oder unabhängig davon auch der Serving RNC, d.h. die Zuständigkeit der Funknetzwerk-Kontrolleinheit gewechselt werden. Das heißt, daß im Ausführungsbeispiel z.B. nicht mehr die ursprünglich zugeordnete Funknetzwerk-Kontrolleinheit RNC1, sondern jetzt die Funknetzwerk-Kontrolleinheit RNC2 die Funkverbindung zur Mobilfunkstation MP1 kontrolliert. Denn die Basisstation BS3 in der neuen Aufenthaltsfunkzelle CE3 gehört jetzt zu einer zweiten Gruppe von Basisstationen, die von der zweiten Funknetzwerk-Kontrolleinheit RNC2 aus kontrolliert bzw. koordiniert werden. Die Funknetzwerk-Kontrolleinheit RNC2 stellt schließlich über die Festnetzverbindung LRM2 auf direktem Weg die Kommunikationsverbindung zum Sprach- und/oder Datenaustausch mit der höherenrangigen Netzwerkeinheit MSC1 her. Ein solcher Wechsel der Funknetz-Kontrolleinheit wird als SRNS relocation bezeichnet. Die Gesamtverbindung zwischen der jeweilig zu ortenden Mobilfunkstation und MSC/SGSN bildet sich somit aus FV13, LBR32, LRM2, was mit dicker ausgezogenen Linien in der Figur 2 gekennzeichnet ist.

Eine SRNS relocation ist dabei unabhängig von einem Handover, das heißt die SRNS relocation kann viel später als der Handover von einer Basisstation zur nächsten erfolgen. So kann z.B. zunächst ein Handover erfolgen, bei der die Mobilfunkstation von der Funkverbindung FV12 mit der Basisstation BS2 zu einer Funkverbindung FV13 mit der Basisstation BS2 wechselt, während für die Kommunikation mit der höherrangigen Netzwerkeinheit MSC1 nach wie vor die schon vorher zuständige, erste Funknetzwerk-Kontrolleinheit RNC1 maßgebend bleibt und noch nicht die zweite Funknetzwerk-Kontrolleinheit RNC2. Die Gesamtverbindung zwischen der Mobilfunkstation MP1 und der höheren Netzwerkeinheit MSC besteht dann aus FV13, LBR32, LR12 und LRM1, wie in Figur 3 durch dicker gezeichnete Linien veranschaulicht. Zu einem späteren Zeitpunkt kann sich dann die höhere Netzwerkeinheit MSC1 entscheiden, den Serving RNC zu wechseln, d.h. hier der serving RNC1 kann die Kontrolle an die andere, zweite Funknetzwerk-Kontrolleinheit RNC2 abgeben, so daß die Gesamtkommunikationsverbindung anschließend wieder der in Figur 2 entspricht.

Während des Wechsels des Serving RNC (SRNS relocation), werden die zur Kontrolle der Mobilfunkstation notwendigen Informationen von der alten Funknetzwerk-Kontrolleinheit, hier RNC1, an die neue Funknetzwerk-Kontrolleinheit, hier RNC2, übertragen. Ein Beispiel für solche Informationen sind die Konfiguration der bestehenden Datenübertragung, Fähigkeiten der Mobilfunkstation usw.

In den Dokumenten TS 25.305 "Stage 2 funtional specification of location services in UTRAN" und TS 23.171 "Functional Stage 2 description of location services in UMTS" werden die sogenannten Location Services detailliert beschrieben. Unter Location Services versteht man die Möglichkeit die Position einer Mobilfunkstation zu bestimmen. Dies kann durch Messungen von Funksignalen entweder in der Mobilfunkstation oder in der Basisstation erfolgen. Die genaue Funktion der Methoden zur Positionsbestimmung finden sich dort.

Eine Anfrage, die Position einer Mobilfunkstation zu bestimmen, kann entweder durch das Netzwerk oder durch die Mobilfunkstation selber bzw. durch eine weitere Mobilfunkstation erfolgen. In Figur 4 ist der Ablauf einer Positionsbestimmung schematisch dargestellt. Dabei wird beispielhaft davon ausgegangen, daß die Mobilfunkstation MP1 von Figur 1 nach der eigenen Position fragt. Dies geschieht mit einer ersten Nachricht ME1, die von der Mobilfunkstation MP1 über die Funkverbindung FV12, die Verbindung LBR21 zwischen Basisstation BS2 und der Funknetzwerk-Kontrolleinheit RNC1, und die Verbindung LRM1 an die höhere Netzwerkeinheit MSC1 gesendet wird. Die höhere Netzwerkeinheit MSC1 sendet daraufhin eine Positionsbestimmungs-Anfrage mit einer Nachricht ME2 (= Location Service Request) an die Funknetzwerk-Kontrolleinheit RNC1. In der Anfrage sind Informationen enthalten, wie die Position zurückgegeben werden soll (z.B. alls geographischer Ort oder als ein Identifikator für eine Bestimmte Gegend), zu welchen Zeitpunkten die Information an die höhere Netzwerkeinheit MSC1 zurückgegeben werden soll (z.B. sofort oder bei Änderung der Position), und wie genau die Position bestimmt werden soll. In der Funknetzwerk-Kontrolleinheit RNC1 wird die Anfrage gespeichert und es werden die notwendigen Prozeduren gestartet, um die Position der Mobilfunkstation zu bestimmen. Solche Positionsbestimmungs-Prozeduren sind teilweise im Standard angegeben; daher werden sie in der Figur 4 nur als Block dargestellt. Ist die Position bestimmt worden, so wird diese in der momentan zuständigen Funknetzwerk-Kontrolleinheit RNC1 gespeichert, was in Figur 4 durch einen Block ST angedeutet ist. Die Kontrolleinheit sendet daraufhin eine Nachricht ME3 (Location Report) an die zugeordnete höhere Netzwerkeinheit MSC1 zurück, in der dieser die Position in der gewünschten Genauigkeit mitgeteilt wird.

Relevant für eine effiziente Positionsermittlung ist es insbesondere, Location Services spezifische Informationen bei einer SRNS relocation von der Ursprungs- bzw. Ausgangs- (Source) Funknetzwerk-Kontrolleinheit wie hier z.B. RNC1 zur Ziel- (Target) Funknetzwerk-Kontrolleinheit RNC2 weiterzugeben. Source Kontrolleinheit ist dabei die Funknetz-Kontrolleinheit, welche die Mobilfunkstation vor der SRNS relocation kontrolliert, hier im Ausführungsbeispiel also RNC1. Target-Kontrolleinheit ist diejenige Funknetz-Kontrolleinheit, welche dieselbe Mobilfunkstation nach der SRNS relocation kontrolliert, hier im Ausführungsbeispiel also RNC2.

Besonders zweckmäßig ist es, daß die ein oder mehreren Positionsbestimmungs-Anfragen (Location Service Request) und deren zugehörigen Informationen wie z.B. Zeitpunkt des erwarteten Berichts, Art der Positionsangabe, Genauigkeit der Positionsangabe, von der Source-Kontrolleinheit zur Target-Kontrolleinheit bei und/oder nach dem Zuständigkeitswechsel der Funknetzwerk-Kontrolleinheiten weitergegeben werden. Dadurch ist eine sofortige Weiterbearbeitung der task Positionsermittlung, d.h. der jeweiligen Positionsermittlungs-Anfrage weitgehend verzögerungsfrei ermöglicht, die die Source-Kontrolleinheit (hier RNC1) vor der SRNS relocation von der höheren Netzwerkeinheit MSC1 empfangen hat, die jedoch während der SRNS relocation, also der Prozedur während dessen die Mobilfunkstation die Funknetz-Kontrolleinheit wechselt, nicht vollständig bearbeitet werden konnte, beispielsweise wenn die Position des Mobilfunkgerätes noch nicht bestimmt werden konnte, oder die Position noch nicht in einer Nachricht (Location Report) an die höhere Netzwerkeinheit MSC1 zurück gesendet werden konnte. Vorteilhaft kann es sein, die Positionsbestimmungs-Anfragesignale und zusätzlich deren zugehörigen Informationen über schon vorhandene Nachrichten, insbesondere über die sogenannte Relocation Commit Nachricht, von der Source- zur Target-Kontrolleinheit zu senden. Diese Relocation Commit Nachricht wird sowieso zwischen den Funknetzwerkeinheiten wie z.B. RNC1, RNC2 über deren jeweiliger Direktverbindung wie z.B. LR12 ausgetauscht. Mit der Relocation Commit Nachricht wird der Target-Kontrolleinheit - hier RNC2 - mitgeteilt, die SRNS relocation durchzuführen. Dies ist vorteilhaft, da es sich bei den Anfragen um Informationen handelt, die von höheren Netzwerkelementen (wie z.B. MSC1) kommen und der sogenannte Container (= mindestens ein Daten- bzw. Informationsfeld) innerhalb der Relocation Commit Nachricht verwendet werden kann, der bereits die Informationen bzgl. der höheren Netzwerkeinheiten transportiert. Auch möglich wäre der Transport der Positionsermittlungs-Anfragen und ggf. deren zugehöriger Informationen in einem sogenannten RRC Container (RRC= radio resource control=Funkresourcenkontrolle), der in den Nachrichten Relocation Required über die Verbindung wie z.B. LRM1 von der Source-Kontrolleinheit wie hier z.B. RNC1 an die höhere Netzwerkeinheit - hier MSC1 - transferiert bzw. gegeben wird, welche den Container anschließend mit einer Relocation Request Nachricht an die Target-Kontrolleinheit - hier RNC2 - weiterleitet.

Weiterhin kann zusätzlich zur Positionsermittlungs-Anfrage ggf. die letzte in der Source-Kontrolleinheit (wie hier RNC1) bekannte Position einer Mobilfunkstation an die Target-Kontrolleinheit (wie hier RNC2) während der SRNS relocation weitergegeben werden. Dies ist vorteilhaft, wenn die Position einer Mobilfunkstation auf Grund einer Anfrage (Location Services Request) durch die höhere Netzwerkeinheit wie z.B. MSC1 bereits bestimmt worden ist, jedoch noch keine Antwort vor der SRNS relocation (Location Report) an diese höhere Netzwerkeinheit wie z.B. MSC1 von der jeweilig zuständigen Funknetzwerk-Kontrolleinheit zurückgesendet werden konnte. Die Information über die letzte bekannte Position kann ggf. auch eine Information über die Genauigkeit der Positionsbestimmung beinhalten. Zusätzlich zur letzten bekannten Position einer Mobilfunkstation kann ggf. der Zeitpunkt, zu dem die Position bestimmt worden ist, während der SRNS relocation von der Source-Kontrolleinheit zur Target-Kontrolleinheit weitergeleitet werden. Dies hat den Vorteil, daß die Target-Kontrolleinheit diese Information verwenden kann, um abzuschätzen, wie aktuell die Information über die Position der Mobilfunkstation ist.

Besonders vorteilhaft kann es sein, die letzte, bekannte Position, der Zeitpunkt der Positionsbestimmung sowie deren Genauigkeit über die schon vorhandene Nachricht Relocation Required von der Source-Kontrolleinheit wie hier z.B. RNC1 an die höhere Netzwerkeinheit wie hier z.B. MSC1 zugeben, welche die Informationen mit der Relocation Request Nachricht an die Target-Kontrolleinheit wie hier z.B. RNC2 weiterleitet. Dies ist vorteilhaft, da es sich bei der Position, Zeitpunkt der Positionsbestimmung und deren Genauigkeit um Informationen handelt, die auf das Funknetzwerk-Teilsystem (bestehend aus aus jeweiliger Funknetwerk-Kontrolleinheit und zugeordnete Basisstationen) bezogen sind, und die Informationen den RRC Container nutzen können, in dem bereits die Funknetzwerk bezogenen Informationen transportiert werden. Möglich wäre aber auch die Informationen in der Relocation Commit Nachricht direkt von der Source- zur Target- Kontrolleinheit zu geben, was den Vorteil hätte, daß nur eine Nachricht gesendet werden muß.

### Ausführungsbeispiel 1:

Für ein erstes Ausführungsbeispiel wird angenommen, daß in der Funknetz-Kontrolleinheit RNC1, welche die Mobilfunkstation MP1 vor der Relocation kontrolliert, vor der Relocation zwei Anfragen bzgl. einer Positionsbestimmung der zu ortenden Mobilfunkstation MP1 gespeichert sind. Folgende Informationen werden je Anfrage zweckmäßigerweise gespeichert:
- Zeitpunkt, wann die Position berichtet werden soll;
- Art der Positionsangabe;
- Genauigkeit der Positionsangabe;

Weiterhin wird angenommen, daß für die erste Anfrage keine Genauigkeitsanforderungen festgelegt und die Position bereits bestimmt wurde. Die zweite Anfrage soll eine genauere Positionsbestimmung fordern als die bisherige Position liefern kann, weshalb für die zweite Anfrage eine neue Positionsbestimmung durchgeführt werden muß.

Bevor die bereits bestimmte Position für die erste Anfrage an die höheren Netzwerkeinheiten wie z.B. MSC1 berichtet werden kann und bevor die Position für die zweite Anfrage durchgeführt werden kann, wird angenommen, daß die Source-Kontrolleinheit - hier RNC1 - beschließt, die Funknetz-Kontrolleinheit für die Mobilfunkstation MP1 zu wechseln.

In Figur 5 ist der Ablauf einer SRNS relocation nach einer ersten Variante des erfindungsgemäßen Verfahrens dargestellt. Die Architektur sowie das Zusammenwirken der Komponenten des Funkkommunikationssystems für dieses Beispiel ist in der Figur 1 dargestellt. Die Funknetz-Kontrolleinheit (Source RNC) RNC1, die momentan die Mobilfunkstation MP1 kontrolliert, trifft die Entscheidung, die Funknetz-Kontrolleinheit für diese Mobilfunk-' station MP1 zu wechseln (=SRNS relocation).

Im folgenden werden zwei Möglichkeiten beschrieben, wie bereits ermittelte, d.h. vorhandene Positions-Informationen von der Source- zur Target-Kontrolleinheit transportiert werden können, so daß die Target-Kontrolleinheit RNC2 die Anfragen nach Positionsbestimmungen erhält und diese weiter bearbeiten kann.

### a)

In der ersten Variante wird die letzte bekannte Position eventuell zusammen mit einer Information über den Zeitpunkt, wann die Position bestimmt wurde, in einer ersten Nachricht SI1 (Relocation Required) zusammen mit den Einstellungen, die die Source= Kontrolleinheit RNC1 für die Mobilfunkstation MP1 angewendet hat, an die höhere Netzwerkeinheit MSC1 gesendet. Diese sendet daraufhin die Nachricht SI2 (Relocation Request) an die Ziel-Funknetz-Kontrolleinheit (Target) RNC2, die nach der SRNS relocation die Kontrolle über die Mobilfunkstation haben soll. Die Target-Kontrolleinheit RNC2 kennt somit die letzte bekannte Position der Mobilfunkstation MP1 und eventuell den Zeitpunkt der Positionsbestimmung sowie eventuell die Genauigkeit der Positionsbestimmung, falls die letzten beiden Informationen in den Nachrichten SI1 und SI2 enthalten sind. In der zweiten Nachricht sind die Einstellungen enthalten, die die Source-Kontrolleinheit RNC1 für die Kontrolle der Mobilfunkstation MP1 verwendet hat. Die Target-Kontrolleinheit RNC2 überprüft, ob genügend Resourcen zur Verfügung stehen und sendet dann eine Nachricht SI3 (Relocation request Acknowledged) an die höhere Netzwerkeinheit MSC1 zurück. Diese sendet daraufhin eine vierte Nachricht (Relocation Command) SI4 an die Source-Kontrolleinheit RNC1, um dieser mitzuteilen, daß nun die Funknetz-Kontrolleinheit für die Mobilfunkstation MP1 gewechselt werden soll. Die Source-Kontrolleinheit RNC1 sendet daraufhin eine fünfte Nachricht (Relocation Commit) SI5 an die Target-Kontrolleinheit RNC, wodurch dieser mitgeteilt wird, die SRNS relocation durchzuführen. In der fünften Nachricht (Relocation Commit) SI5 sollen die Anfragen und deren zugehörigen Information oder Informationen (z.B. Zeitpunkt, wann Position berichtet werden soll, Art der Positionsangabe, und/oder deren Genauigkeit), die in der Source-Kontrolleinheit RNC1 gespeichert sind, an die Target-Kontrolleinheit RNC2 gesendet werden. Die Target-Kontrolleinheit RNC2 speichert seinerseits nun diese Anfragen. Anschließend sendet die Target-Kontrolleinheit RNC2 eine Nachricht SI6 an die höhere Netzwerkeinheit MSC1 zurück, um zu bestätigen, daß die Relocation fortgeführt wird. Nachdem die Target-Kontrolleinheit RNC2 auch die Mobilfunkstation konfiguriert hat (hier nicht relevant, daher auch nicht in Figur 5 eingezeichnet), sendet sie eine siebte Nachricht SI7 an die höhere Netzwerkeinheit MSC1 zurück, um dieser mitzuteilen, daß die Relocation beendet ist. Die Target-Kontrolleinheit RNC2 wird somit zum Serving RNC für die Mobilfunkstation MP1. Da sie hier im Ausführungsbeispiel die Positionsermittlungs-Anfragen erhalten hat, startet sie in vorteilhafter Weise selbstständig die Positionsbestimmung, um die zweite Anfrage beantworten zu können. Da sie außerdem die letzte bekannte Position, und - wie in diesem Beispiel angenommen - eventuell den Zeitpunkt der Positionsbestimmung, sowie eventuell die Genauigkeit der Positionsbestimmung von der Source-Kontrolleinheit RNC1 erhalten hat, erkennt die Target-Kontrolleinheit RNC2 in diesem Ausführungsbeispiel an Hand des Zeitpunktes der Positionsbestimmung, daß die Position vor kurzem bestimmt worden ist. Sie übernimmt somit diese bereits ermittelte Position, wenn weder die erste noch die zweite Anfrage höhere Genauigkeitsanforderungen gestellt hat. Daraufhin sendet die Target-Kontrolleinheit RNC2 eine Nachricht SI8 (Location report) an die höhere Netzwerkeinheit MSC1 zurück, die die Position der Mobilfunkstation MP1 enthält und die Antwort auf die ursprüngliche erste Anfrage darstellt.

### b)

Die zweite Variante unterscheidet sich von Variante a) nur darin, daß die Information über die letzte bekannte Position der Mobilfunkstation MS1 nicht über die Nachrichten SI1 (Relocation Required) und SI2 (Relocation Request) von der Source- (RNC1) an die Target-Kontrolleinheit (RNC2) weitergegeben werden, sondern zusammen mit den Anfragen in der Nachricht SI5 (Relocation Commit) übermittelt wird.

Allgemein ist die Frage, welche Nachricht die Information von der Source- zur Target-Kontrolleinheit überträgt, zweitrangig. Denkbar wäre zum Beispiel auch, daß die Anfragen nach Positionsbestimmungen und deren zugehörige Informationen (wie Zeitpunkt, wann die Position berichtet werden soll, Art der Positionsangabe und deren Genauigkeit), die in der Source-Kontrolleinheit gespeichert sind, in den Nachrichten SI1 (Relocation Required) und SI2 (Relocation Request) von der Sourcezur Target-Kontrolleinheit mit übertragen werden.

### 2. Ausführungsbeispiel

Im zweiten Ausführungsbeispiel wird berücksichtigt, daß sich die Funktionen zur Positionsbestimmung nicht unbedingt in der jeweiligen Funknetz-Kontrolleinheit befinden müssen. Möglich wäre dann z.B. auch die Architektur eines gegenüber Figur 1 abgewandelten Funkkommunikationsnetzes MCS*, wie sie in Figur 6 dargestellt ist. Dabei ist die Positionsbestimmungs-Funktionalität in die sogenannten Dienenden- Mobil- Positions-Zentren (SMLC = Serving Mobile Location Center) SMLC1, SMLC2 ausgelagert, die über zugehörige Festnetzverbindungen LS1, LS2 mit den Funknetzwerk-Kontrolleinheiten RNC1, RNC2 verbunden sind. Dies entspricht vorzugsweise einer Schnittstellendefinierung bzw. funktionalen Aufgliederung der Positionsermittlungfunktion und des übrigen Aufgabenbereichs der jeweiligen Funknetzwerk-Kontrolleinheit.

Im Gegensatz zum ersten Ausführungsbeispiel wird für das zweite Ausführungsbeispiel angenommen, daß die zwei Anfragen bzgl. einer Positionsbestimmung der Mobilfunkstation MP1 in dem Mobil-Positions Center SMLC1 gespeichert sind, welcher mit der Funknetz-Kontrolleinheit RNC1 verbunden ist, die die Mobilfunkstation vor der Relocation kontrolliert. Folgende Informationen werden wiederum je Anfrage zweckmäßigerweise gespeichert:
- Zeitpunkt, wann die Position berichtet werden soll;
- Art der Positionsangabe;
- Genauigkeit der Positionsangabe;

Weiterhin wird angenommen, daß die erste Anfrage keine Genauigkeitsanforderungen fordert, und die Position bereits bestimmt wurde. Die zweite Anfrage soll eine genauere Positionsbestimmung fordern als die bisherige Position liefern kann, weshalb für die 2. Anfrage eine neue Positionsbestimmung durchgeführt wird.
Bevor die bereits bestimmte Position für die erste Anfrage an die höheren Netzwerkeinheiten berichtet werden kann, und bevor die Positionsermittlung für die zweite Anfrage durchgeführt werden kann, wird angenommen, daß die Source-Kontrolleinheit RNC1 beschließt, die Funknetz-Kontrolleinheit für die Mobilfunkstation MP1 zu wechseln.

In Figur 7 ist der Ablauf einer SRNS relocation dargestellt. Die Funknetz-Kontrolleinheit (Source RNC) RNC1, die momentan die Mobilfunkstation kontrolliert, trifft die Entscheidung die Funknetz-Kontrolleinheit für diese Mobilfunkstation MP1 zu wechseln (SRNS relocation).
Die Informationen können wiederum auf verschiedene Art von der Source-Kontrolleinheit RNC1 zur Target-Kontrolleinheit RNC2 gelangen. In diesem Ausführungsbeispiel wird jedoch nur die schon in Ausführungsbeispiel 1 beschriebene Variante beschrieben.

Zunächst fordert die Source-Kontrolleinheit RNC1 ihr zugeordnetes Serving Mobile Location Center SMLC1 mit einer Nachricht SI01 auf, alle noch gespeicherten und nicht fertig abgearbeiteten Positionsbestimmungs-Anfragen sowie die letzte bekannte Position - eventuell mit Zeitpunkt der Bestimmung und Genauigkeit - an die Source-Kontrolleinheit RNC1 zu senden. Der SMLC1 sendet daraufhin in einer Nachricht SI02 die angeforderten Informationen. In diesem Fall also die letzte bekannte Position sowie den Zeitpunkt der Positionsbestimmung und eventuell die Genauigkeit sowie die beiden Anfragen mit ihren oben genannten Informationen.
In dieser Variante wird die letzte bekannte Position eventuell zusammen mit einer Information über den Zeitpunkt, wann die Position bestimmt wurde, in Nachricht SI1 (Relocation Required) zusammen mit den Einstellungen, die die Source-Kontrolleinheit RNC1 für die Mobilfunkstation MP1 angewendet hat, an die höhere Netzwerkeinheit MSC1 gesendet. Diese sendet daraufhin eine Nachricht SI2 (Relocation Request) an die Target- Funknetz-Kontrolleinheit RNC2, die nach der SRNS relocation die Kontrolle über die Mobilfunkstation haben soll. Target RNC2 kennt somit die letzte bekannte Position der Mobilfunkstation MP1 und eventuell den Zeitpunkt der Positionsbestimmung sowie eventuell die Genauigkeit der Positionsbestimmung, falls die letzten beiden Informationen in den Nachrichten SI1 und SI2 enthalten sind. In der zweiten Nachricht sind die Einstellungen enthalten, die die Source RNC1 für die Kontrolle der Mobilfunkstation verwendet hat. Die Target RNC2 überprüft, ob genügend Resourcen zur Verfügung stehen und sendet dann eine Nachricht SI3 (Relocation request Acknowledged) an die MSC1 zurück. Diese sendet daraufhin eine vierte Nachricht (Relocation Command) SI4 an die Source RNC1, um dieser mitzuteilen, daß nun die Funknetz-Kontrolleinheit für die Mobilfunkstation gewechselt werden soll. Die Source RNC1 sendet daraufhin eine 5. Nachricht (Relocation Commit) SI5 an die Target RNC2, wodurch dieser mitgeteilt wird, die SRNS relocation durchzuführen. In der 5. Nachricht (Relocation Commit) SI5 sollen die Anfragen, die in der Source RNC1 gespeichert sind, an die Target RNC2 gesendet werden. Die Target RNC2 speichert seinerseits nun die Anfragen. Anschließend sendet die Target RNC2 eine Nachricht SI6 an die höhere Netzwerkeinheit MSC1 zurück, um zu bestätigen, daß die Relocation fortgeführt wird. Nachdem die Target RNC2 auch die Mobilfunkstation konfiguriert hat (hier nicht relevant, daher auch nicht in Figur 5 eingezeichnet) sendet sie eine 7. Nachricht SI7 an den MSC1 zurück, um diesem mitzuteilen, daß die Relocation beendet ist. Somit ist der RNC2 nun der Serving RNC für die Mobilfunkstation MS1. Da die Target RNC2 die Anfragen erhalten hat, sendet sie an das Mobil Positions Zentrum SMLC2 eine Nachricht SI71, welche die beiden Anfragen beinhaltet und die letzte bekannte Position der Mobilfunkstation MS1, den Zeitpunkt der Positionsbestimmung und eventuell die Genauigkeit. Das SMLC2 startet dann die Positionsbestimmung, um die zweite Anfrage beantworten zu können. Da es außerdem die letzte bekannte Position und - wie in diesem Beispiel angenommen - eventuell den Zeitpunkt der Positionsbestimmung sowie eventuell die Genauigkeit der erhalten hat, erkennt der SMLC2 in diesem Ausführungsbeispiel an Hand des Zeitpunktes der Positionsbestimmung, daß die Position vor kurzem bestimmt worden ist. Da die erste Anfrage keine Genauigkeitsanforderungen gestellt hat, sendet das SMLC2 eine Nachricht SI72 an die RNC2 zurück, welche ihrerseits in einer Nachricht SI8 (Location report) die Position der Mobilfunkstation MP1 an die MSC1 zurücksendet. Allgeemein betrachtet wird also ein Verfahren zur Positionsermittlung mindestens eines Teilnehmergeräts, insbesondere Mobilfunkgeräts wie z.B. Handy's bzw. Zellulartelefons, eines Funkkommunikationssystems bereitgestellt, das eine Vielzahl von Basisstationen in zugehörigen Funkzellen aufweist. Eine erste Gruppe von Basisstationen wird dabei von mindestens einer ersten Funknetzwerk-Kontrolleinheit und eine zweite Gruppe von Basisstationen von mindestens einer zweiten Funknetzwerk-Kontrolleinheit kontrolliert bzw. koordiniert. Bei und/oder nach einem Zuständigkeitswechsel von einer ersten Funknetzwerk-Kontrolleinheit zu einer zweiten Funknetzwerk-Kontrolleinheit wird mindestens ein Anfragesignal, das zur Positionsermittlung des jeweilig zu ortenden Teilnehmergeräts ursprünglich an die erste Funknetzwerk-Kontrolleinheit gerichtet worden ist, von der ersten Funknetzwerk-Kontrolleinheit zur zweiten Funknetzwerk-Kontrolleinheit weitergegeben.

Vorzugsweise wird das Anfragesignal zur Positionsermittlung zum Bestandteil mindestens eines Übertragungssignals gemacht, mit dem der Zuständigkeitswechsel zwischen einer ersten und einer zweiten Funknetzwerk-Kontrolleinheit ausgelöst oder durchgeführt wird. Dies ist besonders effizient hinsichtlich des Signalisierungsaufwandes.

Zweckmäßig kann es insbesondere sein, beim und/oder nach dem Zuständigkeitswechsel zusätzlich mindestens ein Informationssignal, das in der ersten Funknetzwerk- Kontrolleinheit bereits angefallene Daten zur Positionsermittlung enthält, zur zweiten Funknetzwerk- Kontrolleinheit zu übertragen. Da bereits ermittelte, zur Verfügung stehende Daten zur zweiten, neu zuständigen Funknetzwerk-Kontrolleinheit transferiert werden, ist eine effiziente, insbesondere sehr schnelle, und zuverlässige Positionsermittlung ermöglicht. Als Daten werden im Informationssignal vorzugsweise der Zeitpunkt der Positionsermittlung, Art der Positionsangabe, und/oder Genauigkeit der Positionsangabe übermittelt.

In vorteilhafter Weise kann die erfindungsgemäße Weitergabe des mindestens einen Anfragesignals in einem GSM (global system for mobile communication), UMTS (universal mobile telecommunication system), GPRS (general packet radio service), und/oder im EDGE (enhanced data rates for GSM environments) Funkkommunikationssystem, insbesondere Mobilfunksystem, durchgeführt werden.

Als Teilnehmergerät wird vorzugsweise jeweils ein Mobilfunkgerät, insbesondere Zellulartelefon, oder sonstiges mobiles Informationsterminal verwendet. Daneben kann in manchen Anwendungsfällen auch die Ortung bzw. Standortbestimmung von festinstallierten Teilnehmergeräten im Funkkommunikationssystem wie z.B. von festinstallierten Faxgeräten, Computern, usw. von Interesse sein, wie beispielsweise für eine Wartung.

## Patentansprüche

1. Verfahren zur Positionsermittlung mindestens eines Teilnehmergeräts (MP1) eines Funkkommunikationssystems (MCS), das eine Vielzahl, von Basisstationen (BS1 mit BS4) in zugehörigen Funkzellen (CE1 mit CE4) aufweist, wobei eine erste Gruppe von Basisstationen (BS1, BS2) von mindestens einer ersten Funknetzwerk-Kontrolleinheit (RNC1) und eine zweite Gruppe von Basisstationen (BS3, BS4) von mindestens einer zweiten Funknetzwerk-Kontrolleinheit (RNC2) kontrolliert wird,
**dadurch gekennzeichnet,**
**daß** bei und/oder nach einem Zuständigkeitswechsel von der ersten Funknetzwerk-Kontrolleinheit (RNC1) zur zweiten Funknetzwerk-Kontrolleinheit (RNC2) mindestens ein Anfragesignal (ME1), das zur Positionsermittlung des jeweilig zu ortenden Teilnehmergeräts (MP1) ursprünglich an die erste Funknetzwerk-Kontrolleinheit (RNC1) gerichtet worden ist, von der ersten Funknetzwerk-Kontrolleinheit (RNC1) zur zweiten Funknetzwerk-Kontrolleinheit (RNC2) weitergegeben wird.

2. Verfahren nach Anspruch 1,
**dadurch gekennzeichnet,**
**daß** das Anfragesignal zur Positionsermittlung zum Bestandteil mindestens eines Übertragungssignals (SI1) gemacht wird, mit dem der Zuständigkeitswechsel ausgelöst und/oder durchgeführt wird.

3. Verfahren nach Anspruch 1,
**dadurch gekennzeichnet,**
**daß** beim oder nach dem Zuständigkeitswechsel das Anfragesignal zur Positionsermittlung als eigenständiges übertragungssignal von der ersten Funknetzwerk-Kontrolleinheit (RNC1) zur zweiten Funknetzwerk-Rontrolleinheit (RNC2) weitergegeben wird.

4. Verfahren nach einem der vorhergehenden Ansprüche,
**dadurch gekennzeichnet,**
**daß** beim und/oder nach dem Zuständigkeitswechsel zusätzlich mindestens ein Informationssignal (SI1), das in der ersten Funknetzwerk- Kontrolleinheit (RNC1) bereits angefallene Daten zur Positionsermittlung enthält, zur zweiten Funknetzwerk- Kontrolleinheit (RNC2) übertragen wird.

5. Verfahren nach Anspruch 4,
**dadurch gekennzeichnet,**
**daß** als Daten im Informationssignal (SI1) der Zeitpunkt der Positionsermittlung, Art der Positionsangabe, und/oder Genauigkeit der Positionsangabe übermittelt werden.

6. Verfahren nach einem der vorhergehenden Ansprüche,
**dadurch gekennzeichnet,**
**daß** die Weitergabe des mindestens einen Anfragesignals (ME1) in einem GSM (global system for mobile communication), UMTS (universal mobile telecommunication system), GPRS (general packet radio service), und/oder im EDGE (enhanced data rates for GSM environments) Funkkommunikationssystem, insbesondere Mobilfunksystem, durchgeführt wird.

7. Verfahren nach einem der vorhergehenden Ansprüche,
**dadurch gekennzeichnet,**
**daß** als Teilnehmergerät ein Mobilfunkgerät, insbesondere Zellulartelefon, verwendet wird.

8. Funkkommunikationssystem (MCS) mit einer Vielzahl von Basisstationen (BS1 mit BS4) in zugehörigen Funkzellen (CE1 mit CE4), wobei einer ersten Gruppe von Basisstationen (BS1, BS2) mindestens eine erste Funknetzwerk-Kontrolleinheit (RNC1) und einer zweiten Gruppe von Basisstationen (BS3, BS4) mindestens eine zweite Funknetzwerk-Kontrolleinheit (RNC2) zugeordnet ist,
**dadurch gekennzeichnet,**
**daß** Mittel (RNC1, RNC2, MSC) vorgesehen sind, durch die bei und/oder nach einem Zuständigkeitswechsel von der ersten Funknetzwerk-Kontrolleinheit (RNC1) zur zweiten Funknetzwerk-Kontrolleinheit (RNC2) mindestens ein Anfragesignal (ME1), das zur Positionsermittlung des jeweilig zu ortenden Teilnehmergeräts (MP1) ursprünglich an die erste Funknetzwerk-Kontrolleinheit (RNC1) gerichtet worden ist, von der ersten Funknetzwerk-Kontrolleinheit (RNC1) zur zweiten Funknetzwerk-Kontrolleinheit (RNC2) weitergebbar ist.

## Claims

1. A method of position detection of at least one subscriber device (MP1) of a radio communications system (MCS) having a plurality of base stations (BS1 to BS4) in associated radio cells (CE1 to CE4), wherein a first group of base stations (BS1, BS2) is controlled by at least one first radio network control unit (RNC1) and a second group of base stations (BS3, BS4) is controlled by at least one second radio network control unit (RNC2),
**characterised in that**
during and/or after a handover from the first radio network control unit (RNC1) to the second radio network control unit (RNC2) at least one request signal (ME1), that has originally been directed to the first radio network control unit (RNC1) for position detection of the respective subscriber device (MP1) to be located, is passed on from the first radio network control unit (RNC1) to the second radio network control unit (RNC2).

2. The method according to claim 1,
**characterised in that**
the request signal for position detection is made to be part of at least one transmission signal (SI1), by which the handover is triggered and/or performed.

3. The method according to claim 1,
**characterised in that**
during and/or after the handover the request signal for position detection is passed on as an independent transmission signal from the first radio network control unit (RNC1) to the second radio network control unit (RNC2).

4. The method according to one of the preceding claims,
**characterised in that**
during and/or after the handover at least one information signal (SI1) containing data already accrued in the first radio network control unit (RNC1) is additionally transmitted to the second radio network control unit (RNC2).

5. The method according to claim 4,
**characterised in that**
the point of time of the position detection, the way of the position indication, and/or the preciseness of the position indication are transmitted as data in the information signal (SI1).

6. The method according to one of the preceding claims,
**characterised in that**
the passing on of the at least one request signal (ME1) is performed in a GSM (global system for mobile communication), UMTS (universal mobile telecommunication system), GPRS (general packet radio service) and/or in the EDGE (enhanced data rates for GSM environments) radio communications system, in particular mobile radio system.

7. The method according to one of the preceding claims,
**characterised in that**
a mobile radio device, in particular a cellular phone, is used as a subscriber device.

8. A radio communications system (MCS) comprising a plurality of base stations (BS1 to BS4) in associated radio cells (CE1 to CE4), wherein at least one first radio network control unit (RNC1) is associated with a first group of base stations (BS1, BS2) and at least one second radio network control unit (RNC2) is associated with a second group of base stations (BS3, BS4),
**characterised in that**
means (RNC1, RNC2, MSC) are provided by which, during and/or after a handover from the first radio network control unit (RNC1) to the second radio network control unit (RNC2), at least one request signal (ME1), that has originally been directed to the first radio network control unit (RNC1) for position detection of the respective subscriber device (MP1) to be located, can be passed on from the first radio network control unit (RNC1) to the second radio network control unit (RNC2).

## Revendications

1. Procédé de détection de position d'au moins un dispositif d'utilisateur (MP1) d'un système de communication radio (MCS) comportant une pluralité de stations de base (BS1 à BS4) dans des cellules radio associées (CE1 à CE4), un premier groupe de stations de base (BS1, BS2) étant contrôlé par au moins une première unité de contrôle de réseau de radio (RNC1) et un deuxième groupe de stations de base (BS3, BS4) étant contrôlé par au moins une deuxième unité de contrôle de réseau de radio (RNC2),
**caractérisé en ce que**
lors et/ou après le handover de la première unité de contrôle de réseau de radio (RNC1) à la deuxième unité de contrôle de réseau de radio (RNC2), au moins un signal de requête (ME1), qui a initialement été dirigé à la première unité de contrôle (RNC1) pour la détection de position du dispositif de l'utilisateur (MP1) à localiser, est passé de la première unité de contrôle de réseau de radio (RNC1) à la deuxième unité de contrôle de réseau de radio (RNC2).

2. Procédé selon la revendication 1,
**caractérisé en ce que**
le signal de requête est intégré dans au moins un signal de transmission (SI1), par lequel le handover est déclenché et/ou effectué.

3. Procédé selon la revendication 1,
**caractérisé en ce que**
lors et/ou après le handover, le signal de requête est passé en tant que signal de transmission autonome de la première unité de contrôle (RNC1) à la deuxième unité de contrôle de réseau de radio (RNC2).

4. Procédé selon l'une des revendications précédentes
**caractérisé en ce que**
lors et/ou après le handover au moins un signal d'information (SI1) contenant des données déjà accrues dans la première unité de contrôle de réseau de radio (RNC1) est en outre transmis à la deuxième unité de réseau de radio (RNC2).

5. Procédé selon la revendication 4,
**caractérisé en ce que**
le moment de la détection de position, le mode de l'indication de position, et/ou la précision de l'indication de position sont transmis en tant que des données dans le signal d'information (SI1).

6. Procédé selon l'une des revendications précédentes,
**caractérisé en ce que**
le passage de l'au moins un signal de requête (ME1) est effectué dans un GSM (global system for mobile communication), UMTS (universal mobile telecommunication system), GPRS (general packet radio service) et/ou dans le EDGE (enhanced data rates for GSM environments) système de communication radio, particulièrement un système de radio mobile.

7. Procédé selon l'une des revendications précédentes,
**caractérisé en ce qu'**
un dispositif de radio mobile, particulièrement un téléphone de cellule, est utilisé en tant que dispositif d'utilisateur.

8. Système de communication radio (MCS) comprenant une pluralité de stations de base (BS1 à BS4) dans des cellules associées (CE1 à CE4), au moins une première unité de contrôle de réseau de radio (RNC1) étant associée à un premier groupe de stations de base (BS1, BS2) et au moins une deuxième unité de contrôle de réseau de radio (RNC2) étant associée à un deuxième groupe de stations de base (BS3, BS4),
**caractérisé en ce que**
des moyens (RNC1, RNC2, MSC) sont prévus par lesquels, lors et/ou après un handover de la première unité de contrôle de réseau de radio (RNC1) à la deuxième unité de contrôle de réseau de radio (RNC2), au moins un signal de requête (ME1), initialement dirigé à la première unité de réseau de radio (RNC1) pour la détection de position du dispositif d'utilisateur respectif (MP1) à localiser, peut être passé de la première unité de contrôle de réseau de radio (RNC1) à la deuxième unité de contrôle de réseau de radio (RNC2).
